Europäisches Patentamt

European Patent Office

Office européen des brevets

(11) Publication number: **0 195 430**
**B1**

## EUROPEAN PATENT SPECIFICATION

(45) Date of publication of patent specification: **04.10.89**

(51) Int. Cl.⁴: **F 16 M 1/00**

(21) Application number: **86103705.9**

(22) Date of filing: **19.03.86**

(54) A frame supporting structure for workpiece.

(30) Priority: **20.03.85 JP 40938/85**

(43) Date of publication of application:
**24.09.86 Bulletin 86/39**

(45) Publication of the grant of the patent:
**04.10.89 Bulletin 89/40**

(84) Designated Contracting States:
**DE FR GB NL**

(56) References cited:
**EP-A-0 038 652**
**CA-A-1 198 803**
**US-A-4 073 556**

(73) Proprietor: **MITA INDUSTRIAL CO. LTD.**
**2-28, 1-chome, Tamatsukuri Chuo-ku**
**Osaka 540 (JP)**

(72) Inventor: **Kakibuchi, Norio**
**A9-306, 386, Oazauchiage**
**Neyagawa-shi Osaka, 572 (JP)**

(74) Representative: **Schwan, Gerhard, Dipl.-Ing.**
**Elfenstrasse 32**
**D-8000 München 83 (DE)**

Courier Press, Leamington Spa, England.

## Description

This invention relates to a frame supporting structure, particularly to a supporting structure in which bridge members are fixed between two frames.

As the conventional frame supporting structure of this kind, bridge members are disposed between two frames set face to face each other and the bridge members are held at a specified position and fixed with screws.

As a typical example, the structure built in the frame unit of a copying machine is well known.

The bridge members of copying machines are heavy. They are disposed between the front frame and the back frame of the frame unit of copying machines, and are fixed to both frames.

In a frame supporting structure of this kind an adequate number of screw holes are punched in the front and back frames corresponding to the specified positions at which the ends of the bridge members are to be fixed.

For assembling the bridge member of the conventional frame supporting structure, one hand of the worker is used to hold the bridge member, and the other hand to hold the screws and a fastening tool for fixing the bridge member. In this manner, it is not possible to attach two or more bridge members at a time without fastening the screws temporarily. This method, therefore, involves the problem that final fastening is possible only after fastening temporarily all the bridge members which must be fixed to the front and back frames. Accordingly, the bridge member attaching work is not efficient as it requires, at least, temporary fastening and final fastening.

For assembling the bridge members of the conventional frame supporting structure, it is also necessary to fit the tap holes on the bridge members to each screw hole in the front and back frames before fastening the screws, and final fastening must be made after completing temporary fastening of all the bridge members. This imposes a heavy burden upon the worker and causes a problem in workability.

Moreover, automation of the assembly work is difficult for processes where both temporary fastening and final fastening are required such as in the case of the conventional frame supporting structure.

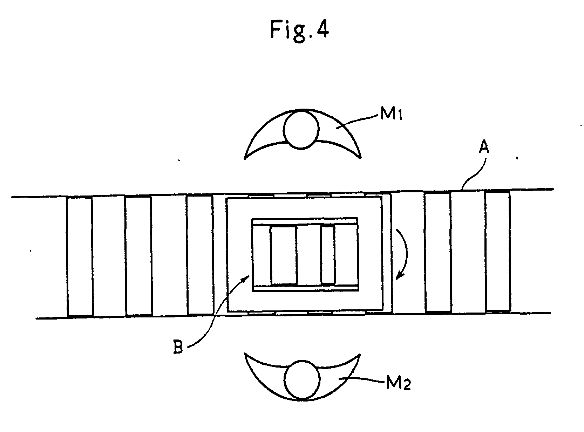

When the assembling is made on a belt conveyor A, as shown in Fig. 4, it is necessary to keep two workers M1 and M2 at each side of the belt conveyor A for assembling from both sides. If assembled by one worker, it is necessary to turn the frame D 180° each time for temporary fastening and final fastening, which is troublesome.

Even when the fastening work is completed for one frame, the other end of the bridge members not fastened yet tends to drop off from the opposing frame unless the bridge member is held as it is by the worker, and deformation or breakage of the assembling members possibly may result.

Furthermore a mobile cabinet is known (US—A—4 073 556) in which each a pair of upstanding stringers are welded to the inner side of a cabinet side wall and the side of a divider wall facing the inner side of the side wall. Each of the stringers is provided with a series of lug-shaped shelf support means. Each of the side edges of a shelf is provided with a pair of vertically depending tongues. The shelf may be selectively mounted between aligned pairs of lugs by inserting the tongues in associated ones of the stringer lugs.

The primary object of the present invention is to provide a frame supporting structure which enables automation of the assembly line of so-called frame compositions and improves workability of the assembling.

Another object of the present invention is to provide a frame supporting structure which prevents deformation and breakage of the assembling members at assembling work and also enables reduction in the manufacturing cost by one-piece moulding or one-piece machining.

With the above objects in view, a frame supporting structure in which bridge members are fixed to a pair of frames which are positioned at a specified relative spacing and are facing each other, wherein projections are formed in one-piece arrangement on at least one of said frames, said projections coming in contact with the bottom of said bridge members, is characterized in that said bridge members are in rod form and are fixed to said frames by screws, and that said projections only are provided to support the bridge rods in vertical and transversal directions.

In conformity with a further aspect of the present invention a method for assembling a frame structure comprises the steps of:

providing front and back frames at both ends of a bottom member in a manner to face each other, said frames having fastening holes and projections being formed on the inner surface of at least one of said front and back frames;

setting a plurality of rod-shaped bridge members between said front and back frames such that ends of said bridge members rest on said projections; and

fastening said bridge members to said front and back frames by screws which pass through said fastening holes of said front and back frames and are inserted into the ends of said bridge members.

As the frame supporting structure of the present invention is composed as described above, the bottom of the bridge members comes in contact with the top of the projections formed inside of the frames when the bridge members laid between the frames come down. By providing the projections at a position below the specific fastening position of the bridge members with an adequate distance, the tap hole provided, for example, on the end of the bridge member facing the frame is fitted to the screw hole provided on the frame side when the bridge member comes down.

The above mentioned objects, other objects, features and advantages of this invention will appear from the description given below in connection with the accompanying drawings illustrating preferred embodiments of this invention.

Fig. 1 is a perspective view, partly in cross section, showing the structure of a preferred embodiment of this invention.

Fig. 2 is a sectional view of the main part in the direction of the arrows II—II of Fig. 1.

Figs. 3(a), (b), (c), (d) are respectively perspective views showing the structure of other preferred embodiments of this invention.

Fig. 4 is a plane figure of a customary conveyor line.

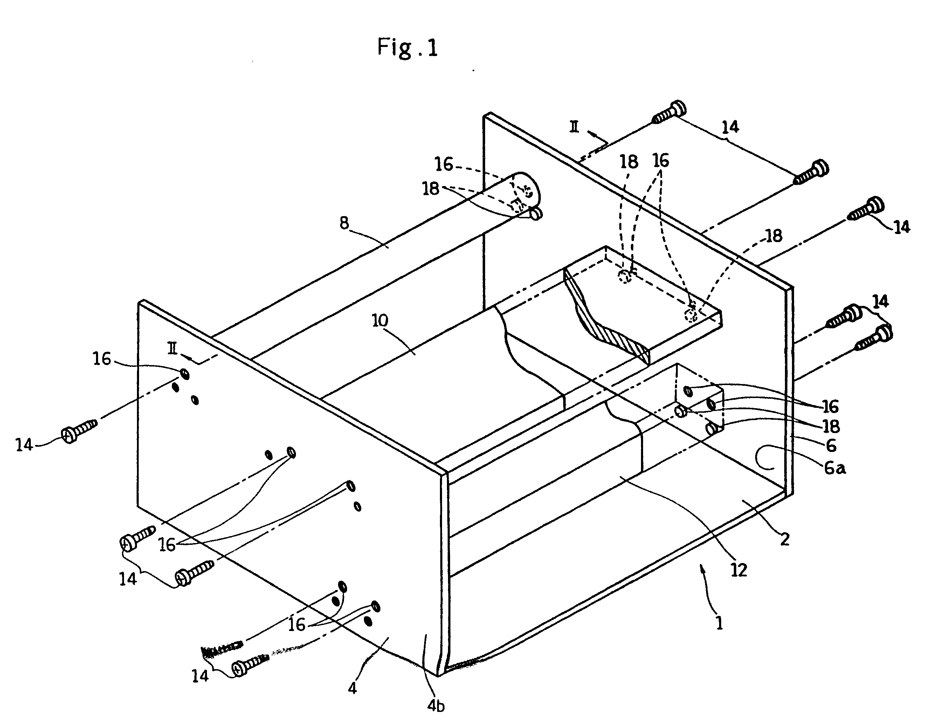

In Fig. 1, a frame supporting structure 1 is provided with a front frame 4 and a back frame 6 attached face to face and set up at both ends of a bottom plate 2 of approximately rectangular outline composing a part of the body frame of a copying machine, for example.

On the front frame 4 and the back frame 6, an adequate number of screw holes 16 are punched at the positions corresponding to respective ends of three rod-shaped bridge members 8, 10, 12 disposed between the frames and fixed at the specified positions with screws 14.

The bridge member 8, for example, is a round bar of circular cross section, and a screw hole 16 is punched at the specific position corresponding to the center of the bridge member 8 to which the bridge member 8 is attached.

The other bridge members 10 and 12 have respectively a rectangular and a square cross-section, and two screw holes 16 are punched at the specified positions to which the bridge members 10, 12 are attached in approximately horizontal direction with an adequate spacing.

On the opposing faces of the front frame 4 and the back frame 6, i.e. the inner faces 4a and 6a, projections 18 are formed in one-piece arrangement under the screw holes 16.

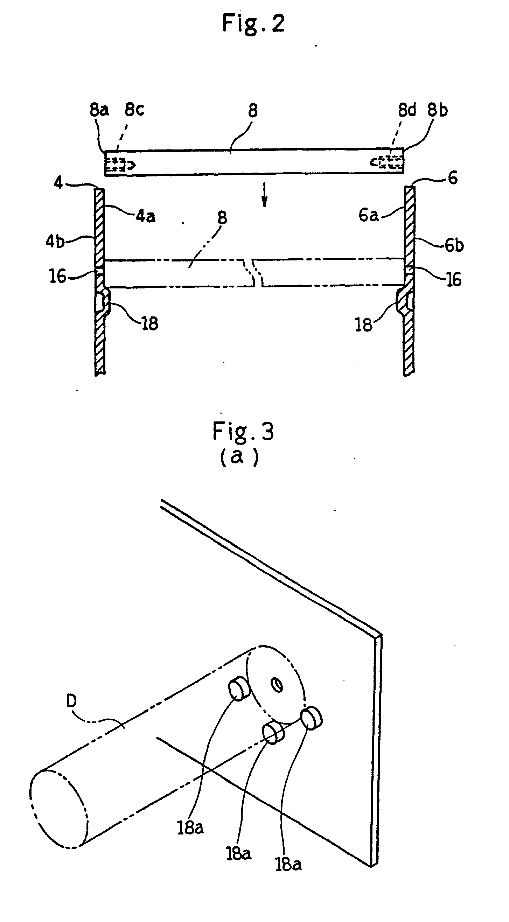

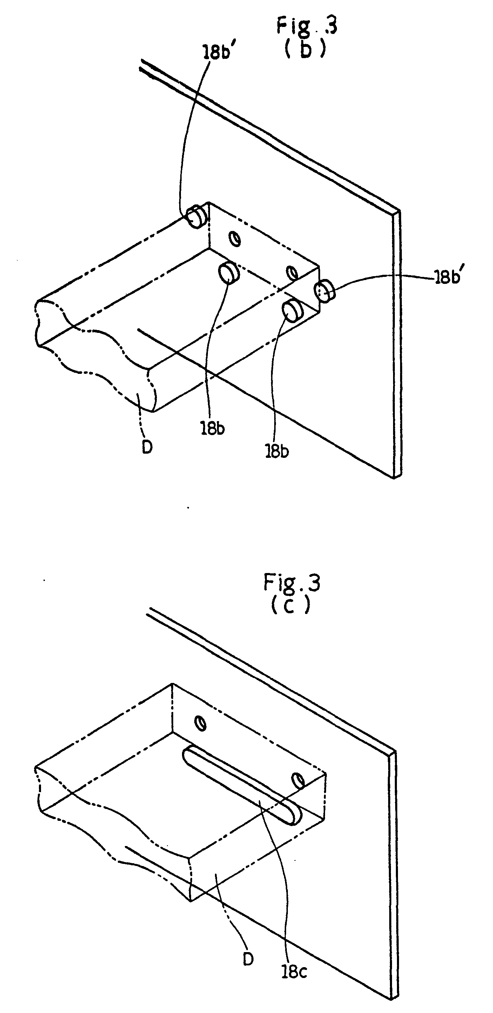

The projections 18 are to support the bridge members 8, 10 and 12 at the bottom thereof and are made, as shown in Fig. 2, by denting the outside 4b, 6b of the frames 4, 6 to the inside 4a, 6a. This is a so-called "Half-punch" in press work, which is advantageous in that the dents can be pressed at the same time when the screw holes 16 are punched.

The projections 18 may not necessarily be pressed but can be made by one-piece molding of synthetic resin.

The projections 18 are positioned relative to the screw holes 16 so that tap holes 8c, 8d drilled in the ends 8a, 8b of the bridge members 8 to 12 respectively facing the frames 4, 6 coincide with the screw holes 16 punched in the frames 4, 6 when the bridge members 8—12 are set on the projections 18 (see Fig. 1 and Fig. 2).

Referring now to Fig. 2, the function of the frame supporting structure 1 is described in the following taking the case of assembling the bridge member 8. Description for assembling the bridge members 10, 12 is omitted to avoid duplication.

When the bridge member 8 is disposed between the front frame 4 and the back frame 6 and is lowered between the frames 4, 6, the lower edges at the ends of the bridge member 8 come in contact with the upper part of the two projections 18 provided on the inner faces 4a, 6a of the front frame 4 and the back frame 6. Thus the bridge member 8 is supported between the front frame 4 and the back frame 6 (shown by two-dot chain lines in the drawing).

If the distance between the screw holes 16 and the projection 18 is set adequately, the tap holes 8c, 8d drilled in the ends 8a, 8b of the bridge member 8 respectively facing the frames 4, 6 are approximately fitted to the screw holes 16 punched in the frames 4, 6.

Consequently, the bridge member 8 can be fixed by screws 14 without being held by hand and without any temporary fastening with the screws.

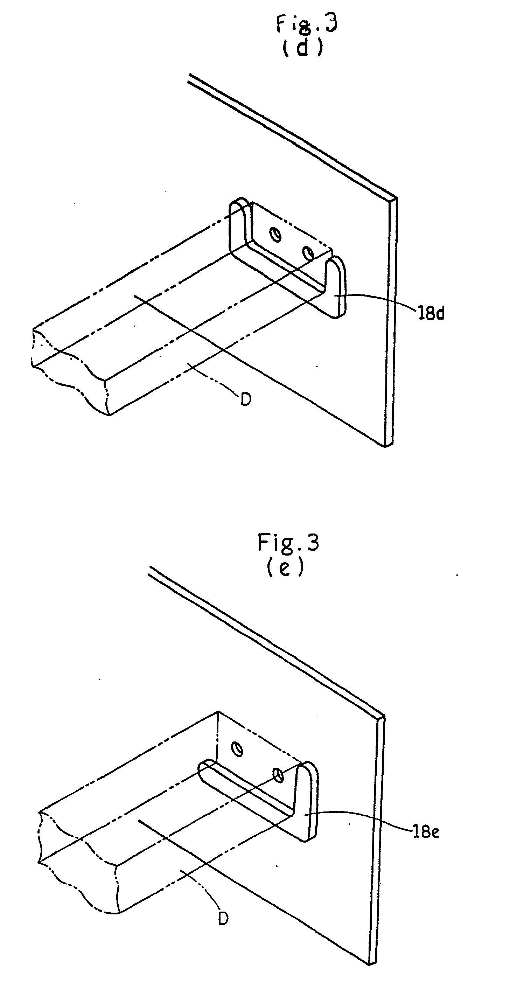

In the above embodiment, the bridge member is supported by two projections. If the bridge member is a cylinder, for example, it may be supported by three projections 18a as shown in Fig. 3(a). In this case, positioning of the bridge member D is more accurate than in the case of the supporting structure shown in Fig. 1 because of the existence of the lower-most projection 18a.

If the bridge member D has a rectangular cross-section, the supporting structure shown in Fig. 3(b) or (c) also is possible. In the case of Fig. 3(b), the projections 18b' for transversal positioning are added to the projections 18b for vertical positioning in the same manner as shown in Fig. 1, while in Fig. 3(c), the projection 18c to support the bridge member D in vertical direction is made to a long rib form. In this case, the rib-shaped projection 18c also serves to reinforce the frame.

The projection 18d shown in Fig. 3(d) is a variation of the projection 18c to enable positioning of the bridge member D in both vertical and transversal directions. When the bridge member D is assembled with pushing from one direction by an assembling robot or the like, it may be also possible to provide an L-shaped projection 18e as shown in Fig. 3(e).

As it has been made clear in the above description, this invention enables the worker to practice final fastening of the screws without holding the bridge members at the specified positions and reduces the burden on the worker. Automation of frame assembling line can also be promoted as the bridge members can be disposed at the specified positions simply by placing them, and yet the processes to fit the tap holes of the bridge members to the screw holes on the frames and to fasten the screws temporarily can be eliminated.

In other words, all the bridge members can be set at the specified positions simply by placing them onto the projections and screw fastening can be made at the same time by an automatic screwing device without any temporary screw fastening.

Moreover, deformation and breakage of the bridge members can be prevented.

Furthermore, the invention is free from any problem in cost as the projections are provided by one-piece machining or one-piece molding without requiring any additional member and can be made simultaneously at the time of screw hole punching or molding.

**Claims**

1. A frame supporting structure in which bridge members (8, 10, 12, D) are fixed to a pair of frames (4, 6) which are positioned at a specified relative spacing and are facing each other, wherein projections (18, 18a, 18b, 18b', 18c, 18d, 18e) are formed in one-piece arrangement on at least one of said frames, said projections coming in contact with the bottom of said bridge members, characterized in that said bridge members (8, 10, 12, D) are in rod form and are fixed to said frames (4, 6) by screws (14), and that said projections (18, 18a, 18b, 18b', 18c, 18d, 18e) only are provided to support the bridge rods in vertical and transversal directions.

2. A frame supporting structure according to claim 1 in which the frames (4, 6) are the frame unit of a copying machine.

3. A method for assembling a frame structure comprising the steps of:
   providing front and back frames (4, 6) at both ends of a bottom member (2) in a manner to face each other, said frames having fastening holes (16) and projections (18) being formed on the inner surface (4a, 6a) of at least one of said front and back frames;
   setting a plurality of rod-shaped bridge members (8, 10, 12, D) between said front and back frames such that ends of said bridge members rest on said projections; and
   fastening said bridge members to said front and back frames by screws (14) which pass through said fastening holes of said front and back frames and are inserted into the ends of said bridge members.

**Patentansprüche**

1. Tragrahmenanordnung, bei der Stege (8, 10, 12, D) an zwei Rahmen (4, 6) befestigt sind, die in vorbestimmten gegenseitigem Abstand angeordnet und einander zugewendet sind, wobei Vorsprünge (18, 18a, 18b, 18b', 18c, 18d, 18e), die mit der Unterseite der Stege in Kontakt kommen, in einstückiger Anordnung an mindestens einem der Rahmen ausgebildet sind, dadurch gekennzeichnet, daß die Stege (8, 10, 12, D) stabförmig ausgebildet und an den Rahmen (4, 6) mittels Schrauben (14) befestigt sind, und daß die Vorsprünge (18, 18a, 18b, 18b', 18c, 18d, 18e) nur vorgesehen sind, um die Stegstäbe in lotrechter und waagrechter Richtung abzustützen.

2. Tragrahmenanordnung nach Anspruch 1, wobei die Rahmen (4, 6) die Rahmeneinheit eines Kopiergerätes sind.

3. Verfahren zur Montage einer Rahmenanordnung, bei dem:
   ein vorderer und ein hinterer Rahmen (4, 6) an beiden Enden eines Bodenteiles (2) einander zugewendet angeordnet werden, wobei die Rahmen Befestigungslöcher (16) aufweisen und an der Innenfläche (4a, 6a) mindestens eines der vorderen und hinteren Rahmen Vorsprünge (18) ausgebildet sind;
   mehrere stabförmige Stege (8, 10, 12, D) zwischen den vorderen und den hinteren Rahmen derart eingesetzt werden, daß die Enden der Stege auf den Vorsprüngen aufliegen; und
   die Stege an dem vorderen und dem hinteren Rahmen mittels Schrauben (14) befestigt werden, welche durch die Befestigungslöcher des vorderen und des hinteren Rahmens hindurchreichen und in die Enden der Stege eingreifen.

**Revendications**

1. Structure de support de châssis dans laquelle des éléments de pontage (8, 10, 12, D) sont fixés à deux châssis (4, 6) qui sont placés à une distance relative spécifiée et sont en face l'un de l'autre, des saillies (18, 18a, 18b, 18b', 18c, 18d, 18e) étant formées dans un système en une seule pièce sur au moins l'un des châssis, lesdites saillies venant en contact avec le fond des éléments de pontage, structure caractérisée en ce que les éléments de pontage (8, 10, 12, D) sont en forme de tiges et sont fixés aux châssis (4, 6) par des vis (14), et en ce que les saillies (18, 18a, 18b, 18b', 18c, 18d, 18e) ne sont prévues que pour supporter les tiges de pontage dans les directions verticale et transversale.

2. Structure de support de châssis selon la revendication 1, dans laquelle les châssis (4, 6) constituent l'ensemble de châssis d'une machine à copier.

3. Procédé pour assembler une structure de châssis comprenant les étapes consistant à:
   prévoir des châssis avant et arrière (4, 6) aux deux extrémités d'un élément de fond (2) de manière à ce qu'ils soient l'un en face de l'autre, lesdits châssis ayant des trous de fixation (16) et des saillies (18) étant formées sur la surface interne (4a, 6a) d'au moins un des châssis avant et arrière; à fixer plusieurs éléments de pontage en forme de tiges (8, 10, 12, D) entre les châssis avant et arrière de manière que les extrémités des éléments de pontage reposent sur les saillies; et
   à fixer les éléments de pontage aux châssis avant et arrière par des vis (14) qui traversent les trous de fixation des châssis avant et arrière et sont insérées dans les extrémités des éléments de pontage.

Fig.1

Fig. 2

Fig. 3
(a)

Fig.3
( b )

18b'

18b'

D

18b

18b

Fig.3
( C )

D

18c

3

Fig.3
( d )

18d

D

Fig.3
( e )

18e

D

## Fig.4